# EUROPÄISCHE PATENTSCHRIFT

(11) **EP 0 442 126 B1**
(45) Veröffentlichungstag und Bekanntmachung des Hinweises auf die Patenterteilung: **02.03.1994**
(21) Anmeldenummer: 90125171.0
(22) Anmeldetag: 21.12.1990
(51) Int. Cl.: B60Q 1/04

(54) **Scheinwerfer für Fahrzeuge**
Headlight for vehicle
Phare pour véhicule

(30) Priorität: 31.01.1990 DE 9001034 U
(43) Veröffentlichungstag der Anmeldung: 21.08.1991
(73) Patentinhaber: Hella KG Hueck & Co., 59552 Lippstadt (DE)
(72) Erfinder: Mohsakowski, Klaus, W-4780 Lippstadt (DE); Brummel, Reinhold, W-4783 Anröchte 3 (DE)

(56) Entgegenhaltungen:
- FR-A- 2 491 019

## Beschreibung

Die Erfindung bezieht sich auf einen Scheinwerfer für Fahrzeuge, mit folgenden Merkmale:
- an das Gehäuse des Scheinwerfers ist ein als Gelenk ausgebildeter Halter angebracht, welcher an der Karosserie festsetzbar ist,
- das Gehäuse ist im Gießverfahren hergestellt, schalenförmig und mit einem rechteckförmig verlaufenden äußeren umlaufenden Randbereich ausgeführt,
- in das Gehäuse ist ein eine rechteckförmige Lichtaustrittsöffnung aufweisender schalenförmiger Reflektor eingesetzt, welcher durch eine rechteckförmige Lichtscheibe abgedeckt ist,
- das Gehäuse weist mittig eine nach hinten gehende, stufig gestaltete Ausbauchung auf, welche sich nahezu über die gesamte Höhe des Gehäuses erstreckt,

Ein solcher Scheinwerfer ist aus der DE-A-31 02 685 bekannt. Durch die zur Rückseite des Scheinwerfers hingehende Ausbauchung des Gehäuses erscheint der Scheinwerfer weiterhin in einer relativ flachen Gestalt und trotzdem ist für die in eine Öffnung am Scheitel des Reflektors eingesetzte Glühlampe und deren elektrische Kontaktanschlüsse ausreichend Platz vorhanden. Ein solcher Scheinwerfer erscheint besonders dann in einer flachen Gestalt, wenn das Gehäuse zwischen der Ausbauchung und seinem vertikalen Randbereich einen Gehäuseabschnitt aufweist, welcher entsprechend dem ihm benachbarten Reflektorabschnitt geformt ist und zu diesem in einem Abstand verläuft (siehe hierzu DE-A-16 55 732). Dieser Abstand kann sich zum vertikalen Randbereich hin vergrößern, damit für die Befestigungselemente des Reflektors und der Lichtscheibe ausreichend Platz vorhanden ist. Sollen solche Gehäuse einen Reflektor mit einer großen Lichtaustrittsfläche aufnehmen, so ist ein vibrationsfreier Anbau des Gehäuses bzw. des Reflektors an der Fahrzeugkarosserie nicht sicher.

FR-A-8 111 170 zeigt ein die Steifigkeit erhöhendes schalenförmiges Element, das an der Innenseite eines Leuchtenkörpers angeordet ist und kreisförmig verläufende Nuten aufweist.

Aufgabe der Erfindung ist es, bei dem im Gattungsbegriff beschriebenen Scheinwerfer die Form des schalenförmigen Gehäuses so zu gestalten, daß es auch bei großen Abmessungen in der Lichtaustrittsfläche über die gesamte Breite sehr verwindungssteif ist. Darüber hinaus soll die Außenseite des Gehäuses keine Einfallstellen wegen Materialanhäufung aufweisen, die z. B. an einer Anbindung von Versteifungsrippen an glatten Oberflächen entstehen.

Diese Aufgabe wird nach der Erfindung dadurch gelöst, daß
- das Gehäuse zwischen der stufig ausgestalteten Ausbauchung und seinen beiden seitlichen Randbereichen mindestens eine parallel zu den Randbereichen verlaufende und nach außen offenen Nut aufweist,
- die sich von dem oberen Randbereich zu dem unteren Randbereich des Gehäuses hinzieht,
- deren Grundfläche etwa den gleichen Kurvenverlauf wie die an die Nut angrenzenden Abschnitte der Außenseite aufweist,
- deren die Grundfläche und die Seitenflächen bildenden Wandungen etwa die gleiche Wandstärke wie die übrigen Wandungen des Gehäuses aufweisen,
- deren die Seitenflächen bildende Wandungen in einen in das Gehäuseinnere vorspringenden Steg übergehen.

Durch eine solche Lösung erhält der Scheinwerfer eine sehr flache Gestalt und sein Gehäuse ist sowohl durch die die Seitenflächen der Nuten bildenden Wandungen als auch durch die in das Gehäuseinnere vorspringenden Stege versteift. Außerdem können die das Gehäuse versteifenden Stege sehr dick ausgeführt sein, ohne daß Einfallstellen auf der Außenseite des Gehäuses entstehen. Ferner ist es möglich, das Gehäuse und dessen Halter zu einer starren und stabilen Einheit auszubilden, damit der Reflektor und die Lichtscheibe im Fahrbetrieb vibrationsfrei sind.

Bei einem Gehäuse, welches, wie der rechteckförmige Reflektor, eine obere und untere Abflachung aufweist, ist es weiterhin vorteilhaft, wenn die Stege sowohl an die Innenseite der Abflachung als auch an die Innenseite des zwischen den Abflachungen verlaufenden Gehäuseabschnitts angeformt sind. Dadurch ist das Gehäuse sehr verwindungssteif ausgeführt und es ist eine starre und stabile Verbindung des Halters an einer der Abflachungen mit dem Gehäuse möglich.

Weiterhin ist es vorteilhaft, wenn die Stege, ausgehend von den Abflachungen zur horizontalen Mittelebene des Scheiwerfers hin, in ihrer Höhe abnehmen. Dadurch kann trotz einer hohen Verwindungssteifigkeit des Gehäuses der Abstand des Reflektors zur Rückseite des Gehäuses sehr klein sein. Vorteilhaft ist es weiterhin, wenn die Nuten an dem oberen und unteren Randbereich des Gehäuses durch eine quer zu ihrer Längsausdehnung verlaufende Gehäusewandung enden, deren Seitenfläche in die Seitenflächen der Nuten übergeht. Hierbei ist es zweckmäßig, wenn die Gehäusewandung parallel zu dem ihr benachbarten Randbereich des Gehäuses verläuft. Dadurch können sich die Nuten bis nahe zu dem den Reflektor und die Lichtscheibe aufnehmenden Randbereich des Gehäuses hin erstrecken. Ein weiterer Vorteil ist es, wenn die Seitenflächen der Nuten etwa parallel zur Lichtaustrittsrichtung verlaufen. Bei einer solchen Lösung kann die Rückseite des Gehäuses entgegen der Lichtaustrittsrichtung mit einem einstückigen Werkzeugteil entformt werden.

Ebenfalls ist es vorteilhaft, wenn der Abstand der Seitenflächen der Nuten zueinander mindestens der zweifachen Höhe der Seitenfläche entspricht und die Höhe der Seitenflächen der Nuten etwa der Wandstärke des Gehäuses entspricht. Dadurch entstehen auf der Rückseite keine schlecht zu säubernden Schmutzecken und je größer der Abstand der Seitenflächen zueinander ist, umso flacher erscheint das Gehäuse.

Bei einer besonders vorteilhaften Weiterbildung der Erfindung weist der Gehäuseabschnitt eine zum vertikalen Randbereich hinabgehende Stufe auf, deren Stoßfläche etwa so hoch wie die Seitenfläche der Nut ist. In diesem Zusammenhang ist es weiterhin vorteilhaft, wenn die an den Randbereich des Gehäuses angrenzende Trittfläche der Stufe in eine Seitenfläche einer radial nach außen vorspringenden Wandung des Gehäuses übergeht, welche an ihrem äußeren Rand in den oberen und unteren Randbereich übergeht und der laufende Randbereich des Gehäuses zylinderförmig ausgeführt ist. Durch diese Ausgestaltung ist das Gehäuse nicht nur sehr verwindungssteif ausgeführt, sondern im Bereich des Randbereiches ist auch ausreichend Platz für die Befestigungselemente des Reflektors und der Lichtscheibe vorhanden.

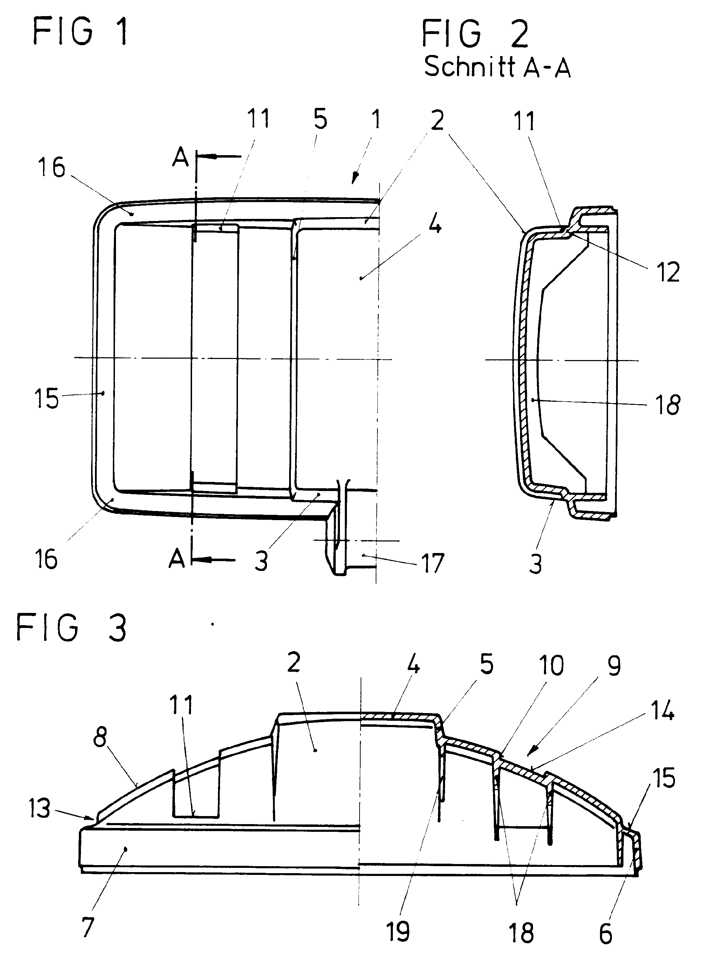

Die Erfindung ist in der Zeichnung dargestellt und zwar zeigt
Figur 1 eine Hälfte einer Rückansicht auf das schalenförmige Gehäuse eines Fahrzeugscheinwerfers,
Figur 2 eine Ansicht nach der Linie A-A und
Figur 3 eine Draufsicht auf das schalenförmige Gehäuse mit einem horizontalen mittleren Halbschnitt.

Das schalenförmige Gehäuse (1) ist aus Kunststoff hergestellt und dient zur Aufnahme eines schalenförmigen Reflektors (in der Zeichnung nicht dargestellt). Der Reflektor weist durch eine obere und untere Abflachung eine rechteckförmige Lichtaustrittsöffnung auf, welche durch eine rechteckförmige Lichtscheibe abgedeckt ist. In eine Öffnung am Scheitel des Reflektors ist eine Glühlampe eingesetzt, welche mit ihrem aus der Öffnung herausragenden Endabschnitt mit elektrischen Anschlüssen verbindbar ist. Damit ein Scheinwerfer mit einem solchen Reflektor in einer möglichst flachen Gestalt erscheint, weist das Gehäuse (1) wie der Reflektor eine obere und untere Abflachung (2) bzw. (3) auf und der die beiden Abflachungen des Gehäuses verbindende Gehäuseabschnitt in einem Abstand etwa der Form des Reflektors folgt. Dieser Gehäuseabschnitt weist mittig etwa eine nach hinten gerichtete Ausbauchung (4) auf, welche sich über die gesamte Höhe des Gehäuses (1) erstreckt. Die Ausbauchung weist zu den Abflachungen und zu den dazwischen liegenden Gehäuseabschnitten eine hinabgehende Stufe (5) auf. Durch diese Ausbauchung ist für die Glühlampe und deren elektrische Anschlüsse im Gehäuseinneren genug Platz vorhanden.

Der umlaufende Randbereich (6 und 7) des Gehäuses (1) ist doppelwandig ausgeführt und bildet eine nach vorn hin offene umlaufende Nut. Die Stirnfläche der inneren Wandung des Randbereichs (6 und 7) dient zur Anlage des Reflektors, welcher zusammen mit der Lichtscheibe durch Befestigungselemente (in der Zeichnung nicht dargestellt) an dem Gehäuse (1) festsetzbar ist. Hierbei dient die äußere Wandung des Randbereichs (6 und 7) zur Zentrierung für den Reflektor und der Lichtscheibe. Der zwischen der Ausbauchung (4) und dem vertikalen Randbereich (6) verlaufende Gehäuseabschnitt (8), welcher etwa der Form des ihm benachbarten Reflektorabschnitts folgt, weist außen eine vertikal verlaufende Nut (9) auf, welche sich über die Abflachungen (2) und (3) bis nahe zu dem oberen und unteren Randbereich (7) des Gehäuses hin erstreckt. Die Seitenflächen (10) der Nut verlaufen etwa parallel zum vertikalen Randbereich (6) des Gehäuses (1) und gehen an den Enden der Nut in die Seitenfläche (11) einer quer zur Nut verlaufenden Wandung (12) des Gehäuses über. Die Höhe der Seitenflächen (10) entspricht etwa der Wanddicke des Gehäuses (1). Der Abstand der Seitenflächen (10) zueinander entspricht etwa 1/3 des Abstandes der Ausbauchung zum vertikalen Randbereich (6) des Gehäuses. Ist der Abstand der Seitenflächen (10) zueinander wesentlich kleiner, so sollten mehrere Nuten in das Gehäuse eingebracht werden, damit dieses weiterhin in einer flachen Gestalt erscheint und eine ausreichende Verwindungssteifigkeit gegeben ist. Der Gehäuseabschnitt (8) weist eine zum vertikalen Randbereich (6) des Gehäuses hin abfallende Stufe (13) auf. Die Höhe der Stoßfläche der Stufe (13) entspricht etwa der Höhe der Seitenflächen (10) der Nut (9). Die Grundfläche (14) der Nut (9) weist etwa einen Oberflächenverlauf auf, wie die an die Nut angrenzenden Gehäuseabschnitte. Die an den Randbereich (6) angrenzende Trittfläche (15) der Stufe (13) geht an ihren Enden in die Seitenflächen (16) einer radial von den Abflachungen (2 und 3) nach außen vorspringenden Wandung über. An das freie Ende dieser Wandung ist die äußere Wandung des doppelwandig ausgeführten Randbereichs (7) angeformt. An die untere Abflachung (3) des Gehäuses ist das nabenartige Halterungsteil (17) angeformt, welches einen Teil des als Gelenk ausgebildeten Halters bildet.

Die die Seitenflächen (10) der Nuten (9) bildenden Wandungen und die Stoßfläche der Stufe (5) aufweisenden Seitenwandungen der Ausbauchung (4) gehen in die in das Gehäuseinnere vorspringenden Stege (18 bzw. 19) über. Die Stege (18 und 19) sind sowohl an der Innenseite der Abflachungen (2 und 3) als auch an den zwischen diesen Abschnitten verlaufenden Gehäuseabschnitt (8) angeformt. Weiterhin nehmen die Stege (18 und 19) in ihrer Höhe, ausgehend von den Abflachungen (2 und 3) zur horizontalen Mittelebene des Gehäuses (1) hin, ab.

## Patentansprüche

1. Scheinwerfer für Fahrzeuge mit folgenden Merkmalen:
- an das Gehäuse (1) des Scheinwerfers ist ein als Gelenk ausgebildeter Halter (17) angebracht, welcher an der Karosserie festsetzbar ist,
- das Gehäuse (1) ist im Gießverfahren hergestellt, schalenförmig und mit einem rechteckförmig verlaufenden, äußeren umlaufenden Randbereich (6, 7) ausgeführt,
- in das Gehäuse (1) ist ein eine rechteckförmige Lichtaustrittsöffnung aufweisender schalenförmiger Reflektor eingesetzt, welcher durch eine rechteckförmige Lichtscheibe abgedeckt ist,
- das Gehäuse (1) weist mittig eine nach hinten gehende, stufig gestaltete Ausbauchung (4) auf, welche sich nahezu über die gesamte Höhe des Gehäuses (1) erstreckt,
dadurch gekennzeichnet, daß
- das Gehäuse (1) zwischen der stufig ausgestalteten Ausbauchung (4) und seinen beiden seitlichen Randbereichen (6) mindestens eine parallel zu den Randbereichen (6) verlaufende und nach außen offene Nut (9) aufweist,
- die sich von dem oberen zu dem unteren Randbereich (7) des Gehäuses (1) hinzieht,
- deren Grundfläche (14) etwa den gleichen Kurvenverlauf wie die an die Nut angrenzenden Abschnitte der Außenseite des Gehäuses aufweist,
- deren die Grundfläche (14) und die Seitenfläche (10) bildende Wandungen etwa die gleiche Wandstärke wie die übrigen Wandungen des Gehäuses aufweisen,
- deren die Seitenflächen (10) bildende Wandungen in einen in das Gehäuseinnere vorspringenden Steg (18) übergehen.

2. Scheinwerfer nach Anspruch 1, dadurch gekennzeichnet, daß bei einem Gehäuse (1), welches, wie der rechteckförmige Reflektor eine obere und untere Abflachung aufweist, die Stege (18) sowohl an die Innenseite der Abflachungen (2 und 3) als auch an die Innenseite des zwischen den Abflachungen verlaufenden Gehäuseabschnitts (8) angeformt sind.

3. Scheinwerfer nach Anspruch 2, dadurch gekennzeichnet, daß die Stege (18), ausgehend von den Abflachungen (1 und 2) zur horizontalen Mittelebene des Gehäuses hin in ihrer Höhe abnehmen.

4. Scheinwerfer nach einem der Ansprüche 1 bis 3, dadurch gekennzeichnet, daß die Nuten (9) an dem oberen und unteren Randbereich (7) des Gehäuses durch eine quer zu ihrer Längsausdehnung verlaufende Wandung (12) des Gehäuses enden, deren Seitenfläche (11) in die Seitenflächen (10) der Nuten (9) übergeht.

5. Scheinwerfer nach Anspruch 4, dadurch gekennzeichnet, daß die Gehäusewandung (12) parallel zu dem ihr benachbarten Randbereich (7) des Gehäuses (11) verläuft.

6. Scheinwerfer nach einem der Ansprüche 1 bis 5, dadurch gekennzeichnet, daß die Seitenflächen (10) der Nuten (9) etwa parallel zur Lichtaustrittsrichtung verlaufen.

7. Scheinwerfer nach einem der Ansprüche 1 bis 6, dadurch gekennzeichnet, daß der Abstand der Seitenflächen (10) der Nuten (9) zueinander mindestens der zweifachen Höhe der Seitenflächen (10) entspricht.

8. Scheinwerfer nach einem der Ansprüche 1 bis 7, dadurch gekennzeichnet, daß der Gehäuseabschnitt (8) eine zum vertikalen Randbereich (6) hinabgehende Stufe (13) aufweist.

9. Scheinwerfer nach Anspruch 8, dadurch gekennzeichnet, daß die Stoßfläche der Stufe (13) etwa so hoch wie die Seitenflächen (10) der Nut (9) ist.

10. Scheinwerfer nach Anspruch 8 oder 9, dadurch gekennzeichnet, daß die an den Randbereich (6) des Gehäuses angrenzende Trittfläche (15) der Stufe (13) in eine Seitenfläche (16) einer radial nach außen vorspringenden Wandung des Gehäuses übergeht, welche an ihrem äußeren Rand in den oberen und unteren Randbereich (7) des Gehäuses übergeht.

11. Scheinwerfer nach einem der Ansprüche 8 bis 10, dadurch gekennzeichnet, daß der umlaufende Randbereich (6, 7) des Gehäuses (1) zylinderförmig ausgeführt ist.

12. Scheinwerfer nach einem der Ansprüche 1 bis 11, dadurch gekennzeichnet, daß die Ausbauchung (4) durch ihre stufige Ausgestaltung parallel zum Randbereich (6) verlaufende Seitenwandungen aufweist, welche in einen in das Innere des Gehäuses vorspringenden Steg (19) übergehen.

13. Scheinwerfer nach Anspruch 12, dadurch gekennzeichnet, daß der Steg (19) ein oder mehrere Merkmale der Stege (18) nach den Ansprüchen 2 und 3 aufweist.

14. Scheinwerfer nach einem der Ansprüche 1 bis 13, dadurch gekennzeichnet, daß die Höhe der Seitenflächen (10) der Nuten (9) und/oder der Stoßfläche der Stufen (13) etwa der Wandstärke des Gehäuses entspricht.

## Claims

1. Vehicle headlamp with the following features:
- fitted on the headlamp housing (1) is a bracket (7) in the form of a knuckle, which is adapted to be fixed on the vehicle body,
- the housing (1) is manufactured by casting, is dish-shaped and is constructed with a rim area (6, 7) extending in a rectangle around the outside of said housing,
- set in the housing (1) is a dish-shaped reflector incorporating a rectangular light exit opening, said reflector being masked by a rectangular lens plate,
- in the middle the housing (1) has a rearward, stepped bulging portion (4) which extends more or less the entire height of the housing (1),
characterised in that
- between the stepped bulging portion (4) and its two lateral rim areas (6), the housing (1) incorporates at least one groove (9) running parallel to the rim areas (6) and opening outwards,
- which stretches from the upper to the lower rim area (7) of the housing (1),
- whose base surface (14) has roughly the same curvature as the sections of the housing exterior bordering to the groove,
- whose walls constituting the base surface (14) and the lateral surface (10) are roughly the same thickness as the remaining walls of the housing,
- whose walls constituting the lateral surfaces (10) merge into a crosspiece (18) which projects into the interior of the housing.

2. Headlamp according to claim 1, characterised in that in the case of a housing (1) which, like the rectangular reflector, incorporates an upper and lower flattened portion, the crosspieces (18) are moulded both onto the inner side of the flattened portions (2 and 3) and onto the inner side of the housing section (8) that extends between the flattened portions.

3. Headlamp according to claim 2, characterised in that the crosspieces (18) decrease in height from the flattened portions (1 and 2) towards the horizontal centre plane of the housing.

4. Headlamp according to any of claims 1 to 3, characterised in that on the upper and lower rim area (7) of the housing, the grooves (9) terminate in a housing wall (12) which runs transversely to the longitudinal extension of said grooves and the lateral face (11) of which merges into the lateral faces (10) of the grooves (9).

5. Headlamp according to claim 4, characterised in that the housing wall (12) extends parallel to the neighbouring rim area (7) of the housing (11).

6. Headlamp according to any of claims 1 to 5, characterised in that the lateral faces (10) of the grooves (9) extend more or less parallel to the direction in which light emerges.

7. Headlamp according to any of claims 1 to 6, characterised in that the distance of the lateral faces (10) of the grooves (9) from one another corresponds to at least twice the height of the lateral faces (10).

8. Headlamp according to any of claims 1 to 7, characterised in that the housing section (8) has a step (13) running down to the vertical rim region (6).

9. Headlamp according to claim 8, characterised in that the abutting face of the step (13) is roughly as high as the lateral faces (10) of the groove (9).

10. Headlamp according to claim 8 or 9, characterised in that the tread surface (15) of the step (13) bordering the rim region (6) of the housing merges into a lateral face (16) of a housing wall which projects radially outwards and the outer edge of which merges into the upper and lower rim region (7) of the housing.

11. Headlamp according to any of claims 8 to 10, characterised in that the rim region (6, 7) around the housing (1) is cylindrical in shape.

12. Headlamp according to any of claims 1 to 11, characterised in that because of its stepped design the bulging portion (4) incorporates side walls which extend parallel to the rim region (6) and merge into a crosspiece (19) projecting into the interior of the housing.

13. Headlamp according to claim 12, characterised in that the crosspiece (19) incorporates one or more features of the crosspieces (18) according to claims 2 and 3.

14. Headlamp according to any of claims 1 to 13, characterised in that the height of the lateral faces (10) of the grooves (9) and/or of the abutting face of the steps (13) roughly matches the thickness of the housing.

## Revendications

1. Phare pour véhicules présentant les caractéristiques suivantes:
- sur le boîtier (1) du phare est monté à la manière d'une articulation un support (17) qui peut être fixé sur la carrosserie,
- le boîtier (1) est fabriqué par la méthode de coulée, en forme de coupe et réalisé avec une région de bordure (6, 7) extérieure circonférentielle rectangulaire,
- dans le boîtier (1) est inséré un réflecteur en forme de coupe présentant une ouverture rectangulaire d'émergence de la lumière, celui-ci étant recouvert par un disque de lumière de forme rectangulaire,
- le boîtier (1) comporte au milieu un évasement (4) en gradins allant vers l'arrière, qui s'étend sur presque toute la hauteur du boîtier (1),
caractérisé en ce que
- le boîtier (1) comporte entre l'évasement en gradins et ses deux régions de bordure latérales (6) au moins une rainure (9) ouverte vers l'extérieur et parallèle aux régions de bordure (6),
- qui s'étend de la région de bordure (7) supérieure à la région de bordure inférieure du boîtier (1),
- dont la surface du fond (14) présente à peu près la même courbe que les segments de la partie extérieure du boîtier qui sont adjacents à la rainure,
- dont les parois formant la surface du fond (14) et les faces latérales (10) ont à peu près la même épaisseur que les autres parois du boîtier,
- dont les parois formant les faces latérales (10) se transforment en une traverse (18) faisant saillie à l'intérieur du boîtier.

2. Phare selon la revendication 1, caractérisé en ce que dans un boîtier (1) qui, comme le réflecteur en forme de rectangle, présente un aplatissement supérieur et inférieur, les traverses (18) sont formées tant sur le côté intérieur des aplatissements (2 et 3) que sur le côté intérieur du segment de boîtier (8) s'étendant entre les aplatissements.

3. Phare selon la revendication 2, caractérisé en ce que les traverses (18) diminuent en hauteur en partant des aplatissements (1 et 2) vers le plan médian horizontal du boîtier.

4. Phare selon l'une des revendications 1 à 3, caractérisé en ce que les rainures (9) se terminent sur les régions de bordure (7) supérieure et inférieure du boîtier par une paroi (12) du boîtier qui est transversale à leur extension longitudinale, dont les faces latérales (11) se prolongent dans les faces latérales (10) des rainures (9).

5. Phare selon la revendication 4, caractérisé en ce que la paroi (12) du boîtier est parallèle à la région de bordure (7) du boîtier (11) qui lui est adjacente.

6. Phare selon l'une des revendications 1 à 5, caractérisé en ce que les faces latérales (10) des rainures (9) sont à peu près parallèles au sens de l'émergence de la lumière.

7. Phare selon l'une des revendications 1 à 6, caractérisé en ce que l'intervalle entre les faces latérales (10) des rainures (9) correspond au moins au double de la hauteur des faces latérales (10).

8. Phare selon l'une des revendications 1 à 7, caractérisé en ce que le segment du boîtier (8) présente un gradin (13) descendant vers la région de bordure (6) verticale.

9. Phare selon la revendication 8, caractérisé en ce que la surface d'about du gradin (13) est à peu près aussi haute que les faces latérales (10) de la rainure (9).

10. Phare selon l'une des revendications 8 ou 9, caractérisé en ce que le palier (15) du gradin (13), qui est adjacent à la région de bordure (6) du boîtier se prolonge en une face latérale (16) d'une paroi du boîtier faisant saillie radialement vers l'extérieur, laquelle se prolonge à sa bordure extérieure dans la région de bordure (7) supérieure et inférieure du boîtier.

11. Phare selon l'une des revendications 8 à 10, caractérisé en ce que la région de bordure (6, 7) circonférentielle du boîtier (1) est réalisée de forme cylindrique.

12. Phare selon l'une des revendications 1 à 11 caractérisé en ce que l'évasement (4) présente par sa configuration en gradins des parois latérales parallèles à la région de bordure (6) qui se prolongent dans la traverse (19) en saillie à l'intérieur du boîtier.

13. Phare selon la revendication 12, caractérisée en ce que la traverse (19) présente une ou plusieurs caractéristiques des traverses (18) selon les revendications 2 et 3.

14. Phare selon l'une des revendications 1 à 13, caractérisé en ce que la hauteur des faces latérales (10) des rainures (9) et/ou de la surface d'about des gradins (13) correspond à peu près à l'épaisseur de la paroi du boîtier.
